Europäisches Patentamt

European Patent Office

Office européen des brevets

(19)

(11) Numéro de publication : **0 319 438 B1**

(12)

# FASCICULE DE BREVET EUROPEEN

(45) Date de publication du fascicule du brevet :
06.05.92 Bulletin 92/19

(51) Int. Cl.⁵ : **G01N 1/04**, A47L 13/00

(21) Numéro de dépôt : **88440091.2**

(22) Date de dépôt : **04.11.88**

(54) **Procédé de contrôle de propreté d'une surface et dispositif pour la mise en oeuvre du dit procédé.**

(30) Priorité : **09.11.87 FR 8715886**

(43) Date de publication de la demande :
**07.06.89 Bulletin 89/23**

(45) Mention de la délivrance du brevet :
**06.05.92 Bulletin 92/19**

(84) Etats contractants désignés :
**AT BE CH DE ES GB GR IT LI LU NL SE**

(56) Documents cités :
**GB-A- 2 165 047
US-A- 4 487 788
US-A- 4 611 498**

(73) Titulaire : **CENTRE TECHNIQUE
INTERNATIONAL DE L'HYGIENE, PROPRETE
ET MAINTENANCE DES LOCAUX
50, rue Saint-Gabriel
F-59000 Lille (FR)**

(72) Inventeur : **Basson, Pierre
50 rue Saint-Gabriel
F-59045 Lille Cedex Nord (FR)**
Inventeur : **Lerbut, Guy
50 rue Saint-Gabriel
F-59045 Lille Cedex Nord (FR)**
Inventeur : **Provoost, Marc
50 rue Saint-Gabriel
F-59045 Lille Cedex Nord (FR)**

(74) Mandataire : **Lepage, Jean-Pierre
Cabinet Lepage & Aubertin Innovations et
Prestations S.A. 23/25, rue Nicolas Leblanc
B.P. 1069
F-59011 Lille Cédex 1 (Nord) (FR)**

EP 0 319 438 B1

## Description

L'invention est relative à un procédé de contrôle de propreté d'une surface ainsi qu'à un dispositif de mise en oeuvre du dit procédé. Elle trouvera notamment son application dans le domaine des services de nettoyage industriel, domestique et autre.

Un contrôle de propreté doit permettre d'apprécier la quantité de poussière non adhérente restant à la surface d'un objet quelconque. Jusqu'à présent, aucune recherche particulière n'a été menée pour réaliser un contrôle de propreté objectif étant donné que les nettoyages étaient effectués de façon interne, qu'il s'agisse de nettoyages industriels ou domestiques, et par conséquent les litiges que pouvait susciter un défaut de propreté trouvaient leur solution dans une voie amiable.

Avec le développement des activités de services, tout particulièrement dans le nettoyage professionnel, il est devenu impératif de pouvoir apprécier objectivement la propreté.

La méthode empirique traditionnelle consiste à passer le doigt sur la surface à tester puis de contrôler le report de poussière sur l'extrémité du doigt. Selon le degré de coloration grisâtre pris par l'extrémité du doigt, il est possible d'établir une relation subjective avec la propreté de la surface testée. Ce procédé ne permet cependant pas d'effectuer des tests comparatifs précis, tout au plus permet-il de juger si un nettoyage récent a été pratiqué.

En effet, de nombreux facteurs peuvent influencer ce type de prélèvement, tout d'abord, la longueur du tracé effectuée par le doigt et la pression appliquée par ce dernier peuvent moduler de façon très sensible le prélèvement de poussière.

Dans ces conditions, il a été nécessaire d'élaborer d'autres systèmes de prélèvements qui donnent des résultats indépendants de l'opérateur. Des essais ont été menés avec l'emploi d'un tissu seul qui est frotté de façon traditionnelle sur la surface à contrôler. La comparaison effectuée entre les prélèvements opérés par différentes personnes a permis d'établir que, même si la surface de prélèvement est rigoureusement identique pour chacun des tests, la pression exercée joue une influence considérable.

Ensuite, même si l'on s'emploie à travailler à pression constante, par exemple, en disposant un poids sur un chiffon que l'on tracte sur une distance déterminée, le contrôle est fiable mais les tests comparatifs difficiles à établir.

Le contrôle est fiable étant donné que les résultats sont identiques quel que soit l'opérateur et s'ils sont réalisés successivement sur le même objet à tester. Toutefois, la teinte grisâtre prise par le chiffon peut difficilement être comparée avec la teinte également grisâtre d'un autre chiffon qui a servi à faire un contrôle de propreté sur une autre surface. Dans ces conditions, la mesure est encore subjective, et le test ne permet pas de se référer à une source étalon qui permettrait d'établir une hiérarchie de niveaux de propreté.

Or, c'est précisément ce qu'il faut obtenir pour que de façon indiscutable, il soit possible de faire état d'un niveau de propreté déterminé.

Le but principal de la présente invention est de présenter un procédé de contrôle de propreté d'une surface qui permette d'établir une planche d'aspect facilement lisible et avec laquelle on peut faire référence à un tableau comparatif.

Le procédé est objectif, indépendant de l'opérateur, et il peut très rapidement être réalisé. Il ne nécessite qu'une petite surface de test et ne crée aucun dommage.

Un autre but de la présente invention est de présenter un dispositif pour la mise en oeuvre du procédé de contrôle de propreté dont la fabrication est de type traditionnel ne nécessitant aucun outillage spécialisé. Son coût de fabrication est modique, ce qui favorise une large diffusion du produit.

Non seulement le procédé de la présente invention permet de contrôler la propreté d'une surface mais également, il peut servir à déterminer l'efficacité d'un produit de nettoyage. En effet, en effectuant le test sur une surface de référence avec différents produits de nettoyage et en comparant les résultats obtenus sur la planche d'aspect, on pourra facilement déterminer, par comparaison, l'efficacité de chacun des produits essayés.

D'autres buts et avantages de l'invention apparaitront également au cours de la description suivante.

Selon l'invention, le procédé de contrôle de propreté d'une surface, destiné à permettre d'établir des tests comparatifs de prélèvement de poussières non adhérentes sur une aire de prélèvement, servant d'aire de référence pour la surface dont la propreté doit être contrôlée, est caractérisé en ce que l'on balaie ladite aire de prélèvement avec un tampon appliqué à pression constante présélectionnée sur lequel il existe une ou des zones préférentielles de prélèvement, et que l'on compare le prélèvement de poussières ainsi effectué par le tampon par rapport à des niveaux de propreté préétablis.

Par ailleurs, selon l'invention, le dispositif de contrôle de propreté d'une surface, pour la mise en oeuvre du dit procédé, permettant d'établir des tests comparatifs de prélèvement des poussières non adhérentes sur une aire de prélèvement, servant d'aire de référence pour la surface dont la propreté doit être contrôlée, est caractérisée en ce qu'il est formé d'un cadre rigide qui défini ladite aire de prélèvement et d'un chariot mobile dans le cadre, qui en assure le soutien, sur lequel est fixé un tampon de prélèvement.

L'invention sera mieux comprise à la lecture de la description suivante accompagnée de dessins en annexe parmi lesquels:

– la figure 1 schématise le balayage d'une aire de référence avec un tampon de prélèvement,

– la figure 2 montre la réalisation de zones préférentielles de prélèvement sur le tampon,

– la figure 3 illustre une planche d'aspect obtenue à l'issue d'un contrôle de propreté,

– la figure 4 représente un mode préférentiel de réalistion d'un dispositif de contrôle de propreté selon l'invention,

– la figure 5 représente la réalisation du chariot mobile de prélèvement pour le contrôle de propreté selon l'invention.

La présente invention vise un procédé de contrôle de propreté d'une surface ainsi qu'à un dispositif de mise en oeuvre du dit procédé. Elle trouvera tout particulièrement son application dans le domaine des services de nettoyage professionnel.

Les tests qui pourront être établis selon le procédé de la présente invention permettront non seulement d'effectuer des comparaisons de propreté mais également ils pourront déterminer des degrés d'efficacité de produits de nettoyage.

Avec le développement des activités de services, en particulier dans le domaine du nettoyage professionnel, il est devenu nécessaire de pouvoir apprécier objectivement une propreté. Jusqu'à présent, le problème ne s'était jamais posé puisque le nettoyage était réalisé par un personnel interne dont on pouvait contrôler facilement le travail. Les équipes de nettoyage moderne interviennent bien souvent en dehors des heures de bureau et, dans ces conditions, il est nécessaire de pouvoir juger leur travail en fonction des résultats.

Le simple fait de passer un chiffon sur une surface permet de se faire une opinion quant à la propreté de celle-ci. Il est toutefois très difficile de pouvoir déterminer un degré de propreté relative selon ce procédé. La surface balayée par le chiffon ainsi que la pression de l'opérateur sur le chiffon exercent une influence sur la quantité de poussière prélevée. Il est indispensable de déterminer des conditions standard de prélèvement qui soient indépendantes de l'opérateur et qui, à circonstance équivalente, fournissent toujours la même réponse.

C'est ainsi que dans un premier temps, le prélèvement a été effectué sur une aire de référence bien définie à l'aide d'un tampon appliqué sur la surface à pression constante. Il s'agit de conditions idéales et objectives étant donné que l'opérateur n'a aucune incidence.

Un prélèvement effectué selon ces critères permet d'obtenir une surface de tampon plus ou moins grisâtre, la nuance suit d'ailleurs un dégradé qu'il est très difficile d'interpréter. Ce test ne permet pas d'établir des essais comparatifs d'après lesquels il serait possible d'effectuer un classement objectif hiérarchique des degrés de propreté. Or, c'est précisément là l'un des objectifs de la présente invention d'obtenir des relevés qui puissent être comparés à un tableau de définition dans lequel sont placés des niveaux de propreté préétablis.

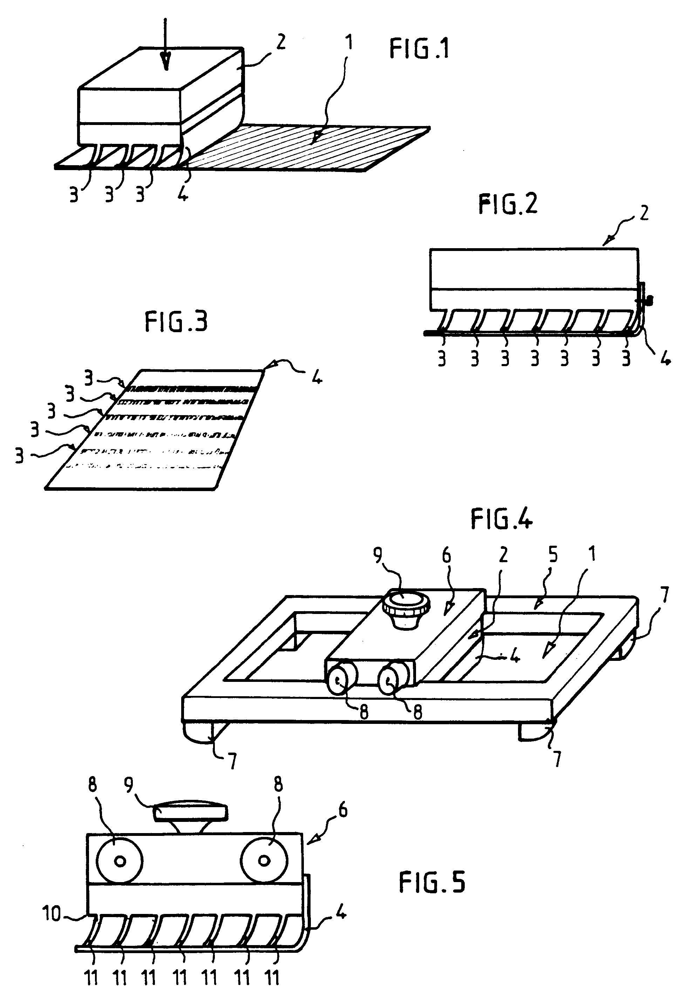

Selon l'invention, le procédé de contrôle de propreté d'une surface se caractérise de la façon suivante. On balaie une aire de prélèvement servant d'aire de référence, telle qu'illustrée à la figure 1, avec un tampon 2 appliqué à pression constante présélectionnée sur lequel il existe une ou des zones préférentielle 3 de prélèvement.

L'aire de prélèvement 1 est bien entendu prise sur la surface dont la propreté doit être contrôlée, la superficie de l'aire de prélèvement est définie selon des conditions standard invariables. L'aire de prélèvement est de préférence plane et les dimensions sont modestes quoique représentatives.

Le tampon 2 comprend, dans sa partie inférieure, une pièce de tissus 4, de gaze, de non-tissé ou autre, qui entre en contact avec l'aire de prélèvement 1, et sur laquelle s'applique la poussière prélevée. Il est important de définir, de façon rigoureuse, la nature de la matière de prélèvement 4 et, de préférence, celle-ci sera en gaze non tissé pré-imprégné, ceci pour garantir la reproductibilité des contrôles.

La figure 2 représente le tampon 2 destiné à balayer l'aire de référence. Celui-ci comprend une semelle formée d'une ou plusieurs zones linéaires 3 par lesquelles se répartit la pression de contact appliquée sur le tampon 2 au niveau de l'étoffe 4 avec l'aire de référence.

Ainsi, il se crée une ou des zones préférentielles de prélèvement localisées au niveau des points d'appui de la semelle du tampon 2 sur l'étoffe 4. Ces zones préférentielles sont, avantageusement, linéaires et leur disposition constitue des zones linéaires successives de prélèvement. Elles sont disposées transversalement par rapport au sens de déplacement du tampon 2 de sorte que chacune des zones 3 balaie successivement l'aire de référence 1.

Lorsqu'on observe le matériau 4 après un contrôle de prélèvement, on obtient une planche d'aspect, telle qu'illustrée à la figure 3, sur laquelle on retrouve les traces correspondant à chacune des zones linéaires préférentielles de prélèvement 3.

Les tracés rectilignes successifs 3 montrent une coloration généralement dégradée, où il est possible de distinguer des lignes foncées et épaisses, foncées et fines, légèrement teintées, à peine apparentes ou non marquées. En comptant le nombre de lignes de chacune des catégories précédentes, il est possible d'opérer un classement pour déterminer le degré de propreté de la surface balayée.

La comparaison entre deux planches d'aspect est nettement plus commode à faire que s'il s'agissait d'une surface continue de prélèvement.

Cet exemple montre plusieurs traits successifs rectilignes. Toutefois, on pourrait imaginer ne faire le relevé qu'au moyen d'une seule ligne avec un patin ne présentant qu'une seule languette transversale.

Pour la mise en oeuvre du procédé précédent, on utilise de préférence un dispositif tel qu'illustré à la figure 4.

Ce dispositif de contrôle de propreté d'une surface comprend un cadre 5 qui définit l'aire 1 de prélèvement. Le dispositif comprend également un chariot mobile 6 dans le dit cadre 5 qui en assure le soutien. A la base du chariot mobile 6 est fixé un tampon 2 destiné à appliquer sur l'aire de prélèvement 1 une pièce de matériau 4 qui, lors du déplacement du chariot 6, collecte la poussière.

Le cadre 5 est rigide et doit en particulier ne pas se déformer sous l'action d'un effort exercé sur le chariot mobile 6. Le cadre 5 assure le soutien du chariot 6 au-dessus de l'aire de prélèvement 1 à une hauteur que l'on peut ajuster en réglant l'épaisseur des pieds 7 placés sous le cadre 5. Ainsi, on peut pré-régler la pression à une valeur présélectionnée, la pression étant ensuite constante pendant toute la translation du chariot 6 dans le cadre 5.

Pour faciliter le déplacement du chariot mobile 6, celui-ci comporte des galets 8 d'appui sur le cadre 5. Le chariot mobile 6 se déplace librement dans l'espace intérieur du cadre 5 qui définit la course linéaire du dit chariot 6.

Une poignée 9 placée à la partie supérieure du chariot 6 facilite sa manoeuvre.

La figure 5 représente le chariot mobile 6 qui comporte à sa base un patin souple d'appui 10 sur lequel s'applique le matériau 4 de prélèvement de poussière.

Le patin souple 10 comporte une ou plusieurs languettes souples 11 transversales juxtaposées qui déterminent la ou les zones d'appui localisées sur le matériau 4. Ces languettes sont, de préférence, inclinées pour mieux suivre les aspérités de la surface à contrôler.

De bons résultats ont été obtenus avec un ensemble de sept languettes 11 ; toutefois, ceci n'est nullement limitatif. En outre, le patin 10 ainsi que les languettes 11 sont, de préférence, réalisés dans un matériau caoutchouté.

D'autres mises en oeuvre de la présente invention, à la portée de l'Homme de l'Art, auraient également pu être envisagées sans pour autant sortir du cadre de celle-ci.

## Revendications

1. Procédé de contrôle de propreté d'une surface, destiné à permettre d'établir des tests comparatifs de prélèvement des poussières non adhérentes sur une aire de prélèvement (1), servant d'aire de référence pour la surface dont la propreté doit être contrôlée, procédé caractérisé en ce que l'on balaie ladite aire de prélèvement (1) avec un tampon (2) appliqué à pression constante présélectionnée sur lequel il existe une ou des zones préférentielles (3) de prélèvement, et que l'on compare le prélèvement de poussières ainsi effectué par le tampon (2) par rapport à des niveaux de propreté préétablis.

2. Procédé de contrôle de propreté selon la revendication 1, caractérisé en ce que la ou les zones préférentielles de prélèvement (3) sont linéaires.

3. Procédé de contrôle de propreté selon la revendication 2, caractérisé en ce que les zones préférentielles de prélèvement (3) sont successives.

4. Dispositif de contrôle de propreté d'une surface, pour la mise en oeuvre du procédé de la revendication 1, permettant d'établir des tests comparatifs de prélèvement des poussières non adhérentes sur une aire de prélèvement 1, servant d'aire de référence pour la surface dont la propreté doit être contrôlée, caractérisé en ce qu'il est formé d'un cadre (5) rigide qui défini ladite aire de prélèvement (1) et d'un chariot mobile (6) dans ledit cadre (5), qui en assure le soutien, sur lequel est fixé un tampon (2) de prélèvement.

5. Dispositif de contrôle de propreté selon la revendication 4, caractérisé en ce que le chariot mobile (6) comporte des moyens de roulement sur le cadre (5) qui se présentent sous la forme de galets (8).

6. Dispositif de contrôle de propreté selon la revendication 4, caractérisé en ce que le chariot mobile (6) comporte un patin souple d'appui (10) à sa base qui s'applique sur le matériau (4) de prélèvement.

7. Dispositif de contrôle de propreté selon la revendication 6, caractérisé en ce que le patin (10) souple comporte une ou plusieurs languettes (11) transversales juxtaposées.

8. Dispositif de contrôle de propreté selon la revendication 7, caractérisé en ce que le patin comporte une série de sept languettes transversales juxtaposées.

9. Dispositif de contrôle de propreté selon la revendication 7, caractérisé en ce que le patin (10) comporte une ou plusieurs languettes (11) transversales inclinées.

10. Dispositif de contrôle de propreté selon la revendication 5, caractérisé en ce que le cadre (5) est équipé de pieds (7) réglables en hauteur.

## Patentansprüche

1. Verfahren zum Nachprüfen der Sauberheit einer Oberfläche, das dazu bestimmt ist, Vergleichsprüfungen von Aufnahme von nichtklebendem Staub auf einer Aufnahmefläche (1), die als Referenzfläche für die Oberfläche dient, deren Sauberheit nachzuprüfen ist, durchführen zu lassen, dadurch gekennzeichnet, daß die genannte Aufnahmefläche (1) mit einem Kissen (2), das mit einem vorgewählten, konstanten Druck aufgelegt wird und auf dem es einen oder mehrere bevorzügte Aufnahmebereiche (3) gibt, abgekehrt wird und daß die also mit dem Kissen (2) durchgeführte Staubaufnahme mit vorbestimmten Sauberheitsgraden verglichen wird.

2. Verfahren zum Nachprüfen der Sauberheit nach Anspruch 1, dadurch gekennzeichnet, daß der oder die bevorzügten Aufnahmebereiche (3) linear sind.

3. Verfahren zum Nachprüfen der Sauberheit nach Anspruch 2, dadurch gekennzeichnet, daß die bevorzügten Aufnahmebereiche (3) auf einander folgen.

4. Vorrichtung zum Nachprüfen der Sauberheit einer Oberfläche, zur Anwendung des Verfahrens nach Anspruch 1, die es erlaubt, Vergleichsprüfungen von Aufnahme von nichtklebendem Staub auf einer Aufnahmefläche (1), die als Referenzfläche für die Oberfläche dient, deren Sauberheit nachzuprüfen ist, durchführen zu lassen, dadurch gekennzeichnet, daß sie aus einem starren Rahmen (5), der die genannte Aufnahmefläche (1) bestimmt, und einem beweglichen Schlitten (6) in dem genannten Rahmen (5), der dessen Unterstützung sichert, an dem ein Aufnahmekissen (2) befestigt ist, gebildet ist.

5. Vorrichtung zum Nachprüfen der Sauberheit nach Anspruch 4, dadurch gekennzeichnet, daß der bewegliche Schlitten (6) Mittel zum Rollen auf dem Rahmen (5) umfaßt, die als Laufrollen (8) ausgestaltet sind.

6. Vorrichtung zum Nachprüfen der Sauberheit nach Anspruch 4, dadurch gekennzeichnet, daß der bewegliche Schlitten (6) an seiner Basis einen biegsamen Stützgleitschuh (10) umfaßt, der auf das Aufnahmematerial (4) aufgelegt wird.

7. Vorrichtung zum Nachprüfen der Sauberheit nach Anspruch 6, dadurch gekennzeichnet, daß der biegsame Gleitschuh (10) eine oder mehrere nebeneinanderliegende Querlaschen (11) umfaßt.

8. Vorrichtung zum Nachprüfen der Sauberheit nach Anspruch 7, dadurch gekennzeichnet, daß der Gleitschuh eine Reihe von sieben nebeneinanderliegenden Querlaschen umfaßt.

9. Vorrichtung zum Nachprüfen der Sauberheit nach Anspruch 7, dadurch gekennzeichnet, daß der biegsame Gleitschuh (10) eine oder mehrere geneigte Querlaschen (11) umfaßt.

10. Vorrichtung zum Nachprüfen der Sauberheit nach Anspruch 5, dadurch gekennzeichnet, daß der Rahmen (5) mit in der Höhe einstellbaren Füßchen (7) versehen ist.

## Claims

1. Process for inspecting the cleanness of a surface, designed to permit the setting up of comparative tests for sampling non-adhering dusts on a sampling area (1), serving as a reference area for the surface the cleanness of which is to be inspected, the said process being characterized in that the said sampling area (1) is swept with a pad (2), applied at a preselected constant pressure, on which there exist one or more preferential sampling zones (3), and in that the dust sample thus taken with the pad (2) is compared with preestablished cleanness levels.

2. Cleanness inspection process according to claim 1, characterized in that the preferential sampling zone or zones (3) are linear.

3. Cleanness inspection process according to claim 2, characterized in that the preferential sampling zones (3) are successive.

4. Device for inspecting the cleanness of a surface, for implementing the process according to claim 1, permitting the setting up of comparative tests for sampling non-adhering dusts on a sampling area 1, serving as a reference area for the surface the cleanness of which is to be inspected, characterized in that it is formed by a rigid frame (5) which defines the said sampling area (1) and by a mobile carriage (6) in the said frame (5), which supports it, to which is fixed a sampling pad (2).

5. Cleanness inspection device according to claim 4, characterized in that the mobile carriage (6) comprises means for travelling over the frame (5) which take the form of rollers (8).

6. Cleanness inspection device according to claim 4, characterized in that the mobile carriage (6) comprises a flexible bearing shoe (10) at its base which is applied against the sampling material (4).

7. Cleanness inspection device according to claim 6, characterized in that flexible shoe (10) comprises one or more juxtaposed transverse tongues (11).

8. Cleanness inspection device according to claim 7, characterized in that the shoe comprises a series of seven juxtaposed transverse tongues.

9. Cleanness inspection device according to claim 7, characterized in that the shoe (10) comprises one or more inclined transverse tongues (11).

10. Cleanness inspection device according to claim 5, characterized in that the frame (5) is equipped with height-adjustable feet (7).

FIG.1

FIG.2

FIG.3

FIG.4

FIG.5